# EUROPEAN PATENT SPECIFICATION

(11) **EP 3 817 369 B1**
(45) Date of publication and mention of the grant of the patent: **11.12.2024**
(21) Application number: 20203816.2
(22) Date of filing: 26.10.2020
(51) Int. Cl.: H04N 5/77, H04N 9/82, G11B 27/00

(54) **IMAGE PICKUP APPARATUS, IMAGE PROCESSING APPARATUS, AND COMPUTER PROGRAM**
BILDAUFNAHMEVORRICHTUNG, BILDVERARBEITUNGSVORRICHTUNG UND COMPUTERPROGRAMM
APPAREIL DE CAPTURE D'IMAGES, PROCÉDÉ DE TRAITEMENT D'IMAGES ET PROGRAMME INFORMATIQUE

(30) Priority: 31.10.2019 JP 2019199106
(43) Date of publication of application: 05.05.2021
(73) Proprietor: CANON KABUSHIKI KAISHA, Ohta-ku Tokyo 146-8501 (JP)
(72) Inventor: JOBARA, Masashi, Ohta-ku, Tokyo 146-8501 (JP)
(74) Representative: Canon Europe Limited

(56) References cited:
- JP-A- 2009 088 878
- US-A1- 2010 283 862
- US-A1- 2011 261 215
- US-A1- 2012 113 282

## Description

### BACKGROUND OF THE INVENTION

### Field of the Invention

The present invention relates to an image pickup apparatus, an image processing apparatus, and a computer program, and especially relates to an image pickup apparatus that captures a raw moving image and an image processing apparatus that processes a raw moving image.

### Description of the Related Art

A raw moving image pickup apparatus that records a moving image called a raw moving image and a raw moving image reproduction apparatus that reproduces and edits a captured raw moving image are known. The raw moving image is data obtained from light received by a complementary metal-oxide semiconductor (CMOS) sensor or the like, and is a moving image obtained by recording data called raw data, which is yet to be subjected to image processing, as data of each frame. Unlike moving image data such as Moving Picture Experts Group (MPEG) data that has been subjected to image processing in advance, performing image processing on each frame of the raw moving image at the time of reproduction or editing enables editing with less degradation or image processing adapted to reproduction output, thereby enabling acquisition of higher image quality data. Meanwhile, since the raw moving image requires the image processing to be performed on each frame at the time of reproduction, the load due to setting the image processing and the load due to the image processing are heavy. Furthermore, since the raw moving image is composed of high image quality data, the file size thereof is large.

As the image processing with respect to a moving image, processing to reduce a change (e.g., brightness) between frames is commonly known. In a raw moving image, an optimum image processing parameter for each frame can be determined. In a case where an image capturing scene changes suddenly during capturing of the moving image and the optimum image processing parameter also changes suddenly, if the moving image is reproduced with a significant change between frames, the moving image may be displayed in an unnatural manner, for example, with flicker. In this regard, in a case where an amount of change in an image processing parameter between frames is too large, applying an image processing parameter obtained by recalculating the amount of change to make the change gentler can provide a display in which a sudden change is prevented. Japanese Patent Laid-Open No. 2018-152699 proposes, in a case where moving images have a steep change at a combining section thereof at the time of combining the moving images, generating a parameter to make a smooth change, applying the parameter, and then combining the moving images.

US patent application publication no. US 2012/113282 describes an image pick-up apparatus that has an image pick-up unit that picks up an image and outputs RAW still image data; a creation unit that creates, when the RAW still image data is picked up, a development parameter that is a parameter used in development processing of the RAW still image data; and a saving unit that saves, in a storage unit, the development parameter created when the RAW still image data is picked up as a first development parameter which can be used in development processing of the RAW still image data, and further saves, in the storage unit, a development parameter created at other time as a second development parameter which can be used in development processing of the RAW still image data, when saving the RAW still image data outputted from the image pick-up unit in the storage unit.

JP patent application publication no. JP 2009 088878 describes an imaging device which is provided with a parameter calculating part for calculating a parameter required for image processing in each frame when reproducing RAW image data on the basis of the RAW image data sequentially outputted from an imaging element in a frame unit, and a medium recording part for recording the calculated parameter corresponding to each frame as a parameter file different from the RAW image data as well as each RAW image data in a recording medium.

US patent application publication no. US 2010/283862 describes an image capturing apparatus which is provided with an image capturing unit and a generating unit. The image capturing unit includes an imaging sensor and captures a subject image to generate RAW data. The generating unit generates a moving image file including moving image data made up of a plurality of sets of RAW data which is generated by the image capturing unit, and incidental information data corresponding to each of the sets of RAW data and including at least one of image capturing information regarding the RAW data and property information of the RAW data.

### SUMMARY OF THE INVENTION

At the time of reproducing a raw moving image captured by a moving image pickup apparatus, image processing can be performed on each frame of the raw moving image using an image processing parameter obtained through change amount reduction processing. However, a process load is heavy at the time of reproducing the raw moving image, and calculating the image processing parameter further increases the processing load, thereby lowering responsivity. In the case of starting the reproduction from the middle of the raw moving image, if the change amount reduction processing is performed on a midway frame from which the reproduction is started and subsequent frames, the image processing parameter may be different between when the raw moving image is reproduced from the middle and when the raw moving image is reproduced from the beginning. Thus, there is an issue that the image processing parameter has to be calculated from an initial frame through the change amount reduction processing even in a case where the reproduction is started from the middle of the raw moving image, and thus an increased processing load further lowers responsivity. In addition, between the image processing parameter calculated through the change amount reduction processing and an image processing parameter that has not been subjected to the change amount reduction processing, a necessary image processing parameter is different depending on a type of reproduction or extraction of the raw moving images.

In view of the above-mentioned issue, the present invention provides a moving image pickup apparatus and an image processing apparatus to which an image processing parameter can be applied without losing responsivity and convenience.

In order to solve the aforementioned problems, one aspect of the present disclosure provides an image pickup apparatus as specified in claims 1 to 8.

The present invention in its second aspect provides a control method as specified in claim 9.

The present invention in its third and fourth aspects provides a computer program and a computer-readable storage medium as specified in claims 10 and 11.

Further features of the present invention will become apparent from the following description of exemplary embodiments with reference to the attached drawings.

### BRIEF DESCRIPTION OF THE DRAWINGS

Fig. 1 is a block diagram illustrating an image processing system according to an exemplary embodiment of the present invention.
Fig. 2 is a flowchart illustrating processing of calculating an ideal correction amount in a moving image pickup apparatus.
Fig. 3 is a flowchart illustrating processing of calculating a moving image correction amount in the moving image pickup apparatus.
Fig. 4 is a flowchart illustrating recording processing in the moving image pickup apparatus.
Fig. 5 is a flowchart illustrating reproduction processing in an image processing apparatus.
Fig. 6 is a flowchart illustrating extraction processing in the image processing apparatus.
Fig. 7 illustrates examples of results of calculating moving image correction amounts.

### DESCRIPTION OF THE EMBODIMENTS

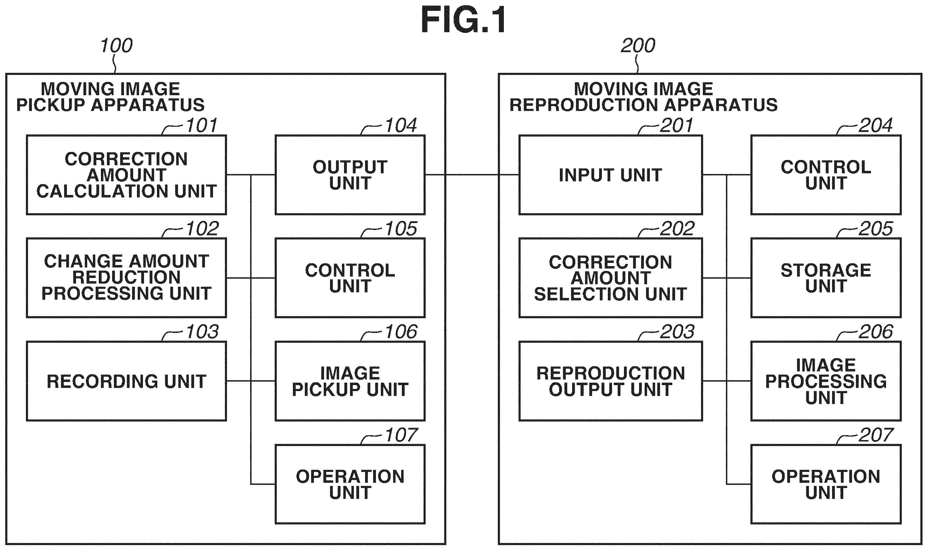

An exemplary embodiment of the present invention will be described in detail below with reference to the accompanying drawings. Fig. 1 is a block diagram illustrating an entire image processing system according to an exemplary embodiment of the present invention.

A typical exemplary embodiment of the present invention will be described.

Fig. 1 is a block diagram illustrating the entire image processing system according to the exemplary embodiment of the present invention. The image processing system includes a moving image pickup apparatus 100 and a moving image reproduction apparatus 200. The moving image pickup apparatus 100 includes a correction amount calculation unit 101, a change amount reduction processing unit 102, a recording unit 103, an output unit 104, a control unit 105, an image pickup unit 106, and an operation unit 107.

The control unit 105 is a control unit that controls the entire moving image pickup apparatus 100 and includes one or more processors. The control unit 105 reads a program from a program memory (not illustrated) and performs control of each unit and various types of arithmetic processing based on the program. The image pickup unit 106 includes, for example, an image pickup element that picks up an image. The operation unit 107 includes a button and a touch panel that accept operations from a user. The control unit 105 is notified of a user operation input to the operation unit 107, and performs control to execute processing corresponding to the input to the operation unit 107. The recording unit 103 records various types of data in a storage medium (not illustrated) such as a memory card. The output unit 104 outputs data recorded in the storage medium by the recording unit 103 or image data captured by the image pickup unit 106 to an external apparatus in a wired or wireless manner. The storage medium in which the recording unit 103 records data may be a storage medium built in the moving image pickup apparatus 100 instead of the memory card.

In the moving image pickup apparatus 100, the control unit 105 starts raw moving image capturing processing in response to input of an instruction for starting capturing of the raw moving image to the operation unit 107 by the user. In the raw moving image capturing processing, an image processing unit (not illustrated) performs compression processing on a raw moving image picked up and acquired by the image pickup unit 106, and the recording unit 103 records the raw moving image as a raw moving image file in the storage medium. The raw moving image capturing processing is performed on the raw moving image picked up by the image pickup unit 106 until an instruction for ending capturing of the raw moving image is input to the operation unit 107. In other words, in the raw moving image capturing processing, the raw moving image captured by the image pickup unit 106 from the input of the instruction for starting the capturing of the raw moving image until the input of the instruction for ending the capturing of the raw moving image is recorded as one raw moving image file in the storage medium.

In the raw moving image capturing processing of the moving image pickup apparatus 100 according to the present embodiment, the recording unit 103 records, together with the raw moving image, an image processing parameter to be used in image processing at the time of reproducing the raw moving image in the storage medium. Thus, the moving image pickup apparatus 100 according to the present embodiment further includes the correction amount calculation unit 101 that calculates the image processing parameter and the change amount reduction processing unit 102. Instead of providing the correction amount calculation unit 101 and the change amount reduction processing unit 102 aside from the control unit 105, the control unit 105 may have functions of the correction amount calculation unit 101 and the change amount reduction processing unit 102.

The correction amount calculation unit 101 calculates an ideal correction amount for each frame of the raw moving image. The change amount reduction processing unit 102 calculates a moving image correction amount using the ideal correction amount calculated by the correction amount calculation unit 101 to make a change amount between frames gentle. Here, the ideal correction amount is an optimum correction amount for a frame of the raw moving image. The moving image correction amount is a correction amount appropriate for reproducing a moving image in which a sudden change between frames is reduced. The ideal correction amount and the moving image correction amount calculated for each frame of the raw moving image are stored in the raw moving image file as information about each frame of the raw moving image and recorded in the storage medium by the recording unit 103. Processing of calculating the ideal correction amount performed by the correction amount calculation unit 101 and processing of calculating the moving image correction amount performed by the change amount reduction processing unit 102 will be described in detail below.

While the image processing parameter (ideal correction amount and moving image correction amount) is recorded in the raw moving image file in the description above, the image processing parameter may be recorded in a file different from the raw moving image file. In such a case, desirably, association information indicating a correspondence relationship between the raw moving image file and the file of the image processing parameter is recorded, and in the case of reading the raw moving image file, the raw moving image file is read together with the file of the image processing parameter.

The moving image reproduction apparatus 200 includes an input unit 201, a correction amount selection unit 202, a reproduction output unit 203, a control unit 204, a storage unit 205, an image processing unit 206, and an operation unit 207.

The input unit 201 communicates with an external apparatus in a wired or wireless manner and acquires data from the external apparatus. The control unit 204 is a control unit that controls the entire moving image reproduction apparatus 200, and includes one or more processors. The control unit 204 reads a program from a program memory (not illustrated) and performs control of each unit and various types of arithmetic processing based on the program. The storage unit 205 is a storage unit that stores data acquired from the external apparatus via the input unit 201. The image processing unit 206 performs various types of image processing on image data (raw moving image) stored in the storage unit 205. The image processing performed by the image processing unit 206 includes development processing of the raw moving image and image correction processing. The operation unit 207 is an operation unit that accepts an operation by the user, and accepts a user operation via a button, a keyboard, a touch panel, and a mouse. The control unit 204 is notified of the user operation input to the operation unit 207, and performs control to execute processing corresponding to the input to the operation unit 207. The reproduction output unit 203 outputs the raw moving image to a display apparatus to reproduce the raw moving image on the display apparatus.

Basic processing executed by the moving image reproduction apparatus 200 will be described. First, the moving image reproduction apparatus 200 acquires the raw moving image file recorded by the moving image pickup apparatus 100 via the input unit 201 and stores the raw moving image file in the storage unit 205. Alternatively, the moving image reproduction apparatus 200 may acquire the raw moving image file not by communicating with the moving image pickup apparatus 100 but by reading the raw moving image file from the storage medium in which the raw moving image file is recorded and store the raw moving image file in the storage unit 205. Here, the ideal correction amount and the moving image correction amount for each frame are recorded as the image processing parameter in the raw moving image file acquired from the moving image pickup apparatus 100, as described above. In a case where reproduction of the raw moving image stored in the storage unit 205 is instructed by the user via the operation unit 207, the control unit 204 reads the raw moving image file as a process target from the storage unit 205. The image processing unit 206 performs image processing on each frame of the raw moving image in the raw moving image file based on the image processing parameter included in the raw moving image file that is a reproduction target. Then, the reproduction output unit 203 reproduces and outputs the raw moving image subjected to the image processing performed by the image processing unit 206 to be displayed on the display apparatus. At the time of reproduction of the raw moving image, the user can instruct the start of the reproduction not only from the initial frame of the raw moving image but also from any frame of the raw moving image selected by the user through a user operation on the operation unit 207. The user can also instruct a pause during the reproduction of the moving images, or instruct the reproduction of only the selected frame.

In the present exemplary embodiment, the image processing parameter includes two parameters, i.e., the ideal correction amount and the moving image correction amount. Thus, the moving image reproduction apparatus 200 according to the present exemplary embodiment further includes the correction amount selection unit 202 that determines which correction amount to use, the ideal correction amount or the moving image correction amount, based on a user operation or an output mode. Instead of providing the correction amount selection unit 202 aside from the control unit 204, the control unit 204 may have a function of the correction amount selection unit 202. The image processing unit 206 performs image processing using the correction amount selected by the correction amount selection unit 202, and the reproduction output unit 203 reproduces and outputs an image subjected to the image processing. In the case of performing extraction processing on the raw moving image, the correction amount selection unit 202 selects which correction amount to use from among the ideal correction amount, the moving image correction amount, and a correction amount obtained by recalculating the moving image correction amount. Then, the image processing unit 206 performs image processing on an image based on the selected correction amount, and the storage unit 205 stores the image subjected to the image processing or stores the extracted raw image to which the selected correction amount is added.

The image processing parameter calculated for each frame may include various types of parameters used in the image processing that change during image capturing. Examples of such parameters include a correction amount of marginal illumination correction for correcting an optical aberration. The marginal illumination correction refers to a correction intended to maintain a light amount to be uniform by applying a reverse characteristic of a characteristic in which a light amount decreases from the optical center toward a periphery due to an optical factor of a lens or a sensor.

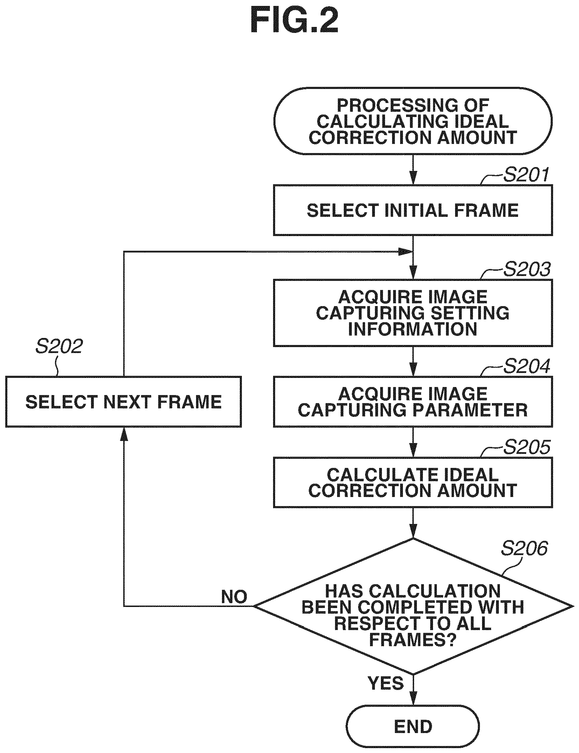

Subsequently, processing of calculating the ideal correction amount performed by the correction amount calculation unit 101 will be described with reference to Fig. 2. Fig. 2 is a flowchart illustrating the processing of calculating the ideal correction amount performed by the correction amount calculation unit 101. The processing of calculating the ideal correction amount is implemented by the correction amount calculation unit 101 reading a program from a program memory (not illustrated) and executing the program. The processing of calculating the ideal correction amount is performed in parallel with the raw moving image capturing processing and is performed with respect to all frames of the raw moving image picked up by the image pickup unit 106 and recorded in the raw moving image capturing processing. More specifically, the ideal correction amount is calculated with respect to each of all the frames of the raw moving image in the raw moving image file.

In step S201, the correction amount calculation unit 101 selects an initial frame captured in the raw moving image capturing processing as a process target frame. In the present exemplary embodiment, since the ideal correction amount is calculated in parallel with the capturing of the raw moving image, the ideal correction amount is sequentially calculated starting from the initial frame. In step S203, the correction amount calculation unit 101 acquires image capturing setting information regarding an image capturing condition at the time of capturing the processing target frame, i.e., a calculation target frame of which the ideal correction amount is calculated. Subsequently, in step S204, the correction amount calculation unit 101 acquires an image capturing parameter of the moving image pickup apparatus 100. Then, in step S205, the correction amount calculation unit 101 calculates the ideal correction amount based on the image capturing setting information acquired in step S203 and the image capturing parameter acquired in step S204, and determines the calculated ideal correction amount as an ideal correction amount of the processing target frame. In step S206, upon completion of the calculation of the ideal correction amount of the processing target frame, the correction amount calculation unit 101 determines whether the calculation of the ideal correction amount has been completed with respect to all the frames of the raw moving image that is a recording target. In a case where the calculation of the ideal correction amount with respect to all the frames has been completed (YES in step S206), the processing ends. In a case where the calculation of the ideal correction amount with respect to all the frames has not been completed (NO in step S206), the processing proceeds to step S202. In step S202, the correction amount calculation unit 101 sets a next frame as the processing target frame. Then, the processing returns to step S203. The processing in steps S203 to S206 is repeated until the processing with respect to all the frames is completed. The ideal correction amount calculated and set to each frame by the correction amount calculation unit 101 is temporarily stored in a memory (not illustrated), and is used in subsequent processing of calculating the moving image correction amount and recording of the image processing parameter by the recording unit 103.

In the calculation of the ideal correction amount, the correction amount calculation unit 101 acquires the following information. In step S203, in a case where calculation of the ideal correction amount for the marginal illumination correction is performed, the correction amount calculation unit 101 acquires image capturing setting information such as International Standards Organization (ISO) sensitivity, an object distance, a focal length, and an aperture value at the time of image capturing. In step S204, the correction amount calculation unit 101 acquires information regarding optical characteristics of the moving image pickup apparatus 100 such as characteristics of a complementary metal-oxide semiconductor (CMOS) sensor and characteristics of a lens in use. In step S205, the correction amount calculation unit 101 calculates the ideal correction amount for the marginal illumination correction from the acquired image capturing setting information and the information regarding the optical characteristics.

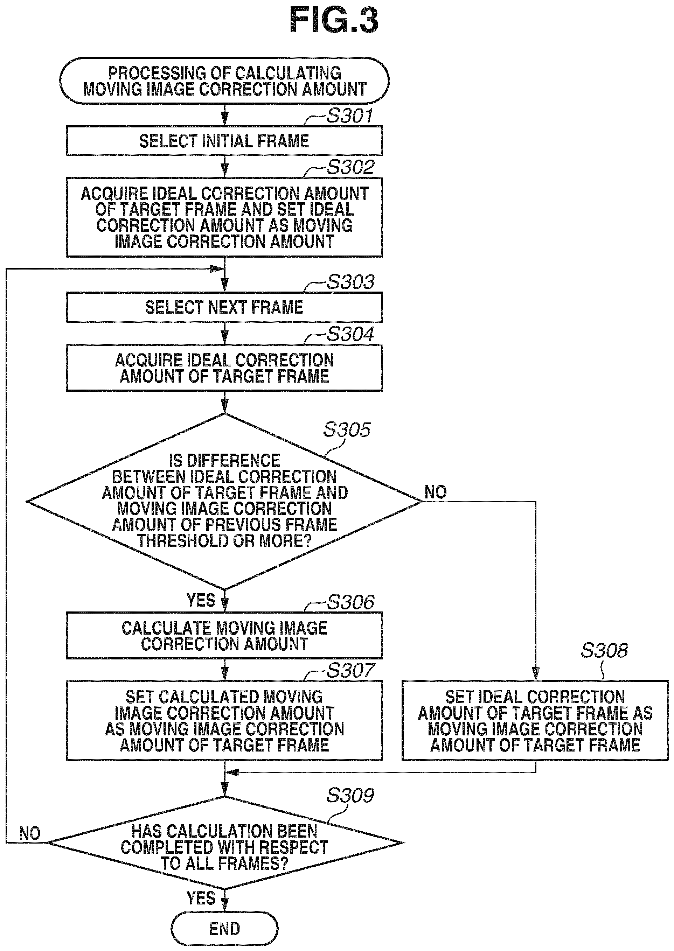

Subsequently, the processing of calculating the moving image correction amount performed by the change amount reduction processing unit 102 will be described with reference to Fig. 3. Fig. 3 is a flowchart illustrating the processing of calculating the moving image correction amount performed by the change amount reduction processing unit 102. The processing of calculating the moving image correction amount performed by the change amount reduction processing unit 102 is processing to calculate a correction amount with which a change amount between frames is reduced with respect to the ideal correction amount and to set the correction amount as the moving image correction amount. The processing of calculating the moving image correction amount is implemented by the change amount reduction processing unit 102 reading a program from the program memory (not illustrated) and executing the program. The processing of calculating the moving image correction amount is performed in parallel with the raw moving image capturing processing and is performed with respect to all the frames of the raw moving image picked up by the image pickup unit 106 and recorded in the raw moving image capturing processing. More specifically, the moving image correction amount is calculated with respect to each of all the frames of the raw moving image in the raw moving image file. In the present exemplary embodiment, since the ideal correction amount is calculated in parallel with the capturing of the raw moving image, the moving image correction amount is sequentially calculated starting from the initial frame. Since the ideal correction amount calculated in the processing of calculating the ideal correction amount is used in the processing of calculating the moving image correction amount, the processing of calculating the moving image correction amount is performed to determine the moving image correction amount after the processing of calculating the ideal correction amount with respect to the processing target frame is completed and the ideal correction amount is determined.

In step S301, the change amount reduction processing unit 102 selects the initial frame captured in the raw moving image capturing processing as the processing target (calculation target) frame. In a case where the initial frame is the processing target frame, there is no previous frame. Thus, in step S302, the change amount reduction processing unit 102 reads the ideal correction amount of the initial frame calculated by the correction amount calculation unit 101 from the memory (not illustrated), and sets the ideal correction amount of the initial frame (head frame) as the moving image correction amount of the initial frame. The change amount reduction processing unit 102 holds the moving image correction amount set at this time to be used in determining the moving image correction amount of the next frame. In step S303, upon completion of the processing of the initial frame, the change amount reduction processing unit 102 selects the next frame as the processing target frame. In step S304, with respect to the second or subsequent frame, the change amount reduction processing unit 102 reads and acquires the ideal correction amount set to the processing target frame by the correction amount calculation unit 101 from the memory. Subsequently, in step S305, the change amount reduction processing unit 102 calculates a difference between the moving image correction amount of the previous frame that has been held and the ideal correction amount of the processing target frame acquired in step S304, and determines whether the difference is a threshold (change amount reduction threshold) or more. More specifically, the change amount reduction processing unit 102 temporarily sets the ideal correction amount of the processing target frame as the moving image correction amount of the processing target frame, and calculates a difference in the moving image correction amount between the processing target frame and the previous frame as a difference in correction amount between frames. If the previous frame is the head frame, the ideal correction amount of the head frame is used as the moving image correction amount of the previous frame. In other cases, the moving image correction amount calculated with respect to the previous frame is used as the moving image correction amount of the previous frame. Since the moving image correction amount calculated with respect to the previous frame is used in the processing of calculating the moving image correction amount with respect to the next frame, the change amount reduction processing unit 102 holds the calculated moving image correction amount until completion of the processing of calculating the moving image correction amount with respect to the next frame.

In a case where the change amount reduction processing unit 102 determines that the difference in correction amount between the frames is the threshold (change amount reduction threshold) or more (YES in step S305), the processing proceeds to step S306. In step S306, the change amount reduction processing unit 102 calculates the moving image correction amount so as to decrease the difference in correction amount. Here, the change amount reduction processing unit 102 calculates a value by adding a half of the difference between the moving image correction amount of the previous frame and the ideal correction amount of the processing target frame to the moving image correction amount of the previous frame. While the change amount reduction processing unit 102 adds the half of the difference between the moving image correction amount of the previous frame and the ideal correction amount of the processing target frame to the moving image correction amount of the previous frame in the present exemplary embodiment, a value obtained by dividing the difference by a predetermined number (one or more), instead of two, may be used. In other words, the change amount reduction processing unit 102 is to decrease the difference to a predetermined ratio and add the decreased difference to the moving image correction amount of the previous frame, and a ratio to which the difference is decreased is not limited thereto. In the description below, the ratio is referred to as a gain coefficient, and the moving image correction amount of the processing target frame is calculated by the following formula. (Moving image correction amount of processing target frame) = (moving image correction amount of previous frame) + (ideal correction amount of processing target frame - moving image correction amount of previous frame) × (gain coefficient)

In the present exemplary embodiment, the change amount reduction processing unit 102 performs the processing of comparing an amount of change between the correction amounts of the processing target frame and the previous frame, and recalculating the correction amount to decrease the difference. However, the processing is not limited thereto and only needs to be processing of obtaining the moving image correction amount based on inter-frame information. Subsequently, in step S307, the change amount reduction processing unit 102 sets the moving image correction amount calculated in step S306 as the moving image correction amount of the currently-selected processing target frame.

In a case where the change amount reduction processing unit 102 determines that the difference in correction amount is less than the threshold (change amount reduction threshold) (NO in step S305), the processing proceeds to step S308. In step S308, the change amount reduction processing unit 102 sets the ideal correction amount of the processing target frame acquired in step S304 as the moving image correction amount.

In step S309, after setting the moving image correction amount of the processing target frame, the change amount reduction processing unit 102 determines whether the processing of calculating the moving image correction amount (setting the moving image correction amount) has been completed with respect to all the frame of the raw moving image that is the recording target. In a case where the processing of calculating the moving image correction amount of all the frames has been completed (YES in step S309), the processing ends. In a case where the processing of calculating the moving image correction amount of all the frames has not been completed (NO in step S309), the processing returns to step S303. Then, the change amount reduction processing unit 102 sets the next frame as the processing target frame, and repeats the processing in steps S303 to S309 until completion of the processing with respect to all the frames. The moving image correction amount calculated and set to each frame by the change amount reduction processing unit 102 is temporarily stored in the memory (not illustrated), and is later used to record the image processing parameter by the recording unit 103.

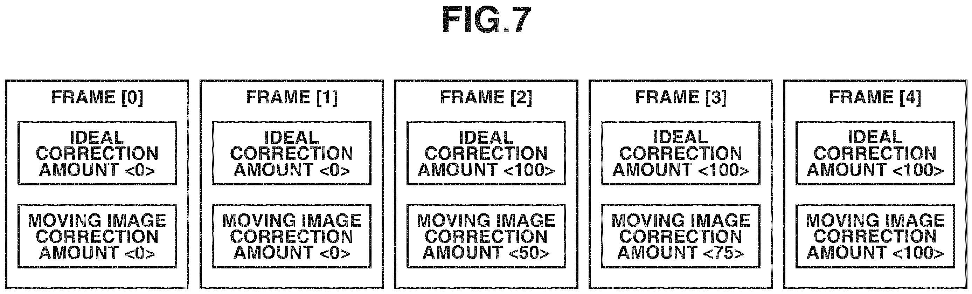

Here, examples of results of calculating moving image correction amounts in the change amount reduction processing unit 102 will be described with reference to Fig. 7. In the example, there are five frames of the raw moving image from a frame 0, serving as the head frame, to a frame 4. The ideal correction amount of each frame is zero for the frame 0 and the frame 1 and is 100 for the frame 2 to the frame 4. In this case, it is considered that the image capturing condition has been changed so that the ideal correction amount suddenly changes during a transition from the frame 1 to the frame 2. Furthermore, in step S305, the change amount reduction threshold for determining whether to perform the change amount reduction processing is 30, and the gain coefficient is 1/2. First, in steps S301 and S302, the change amount reduction processing unit 102 reads the head frame 0 and sets the ideal correction amount of zero as it is as the moving image correction amount. Subsequently, the change amount reduction processing unit 102 reads the frame 1. Since the moving image correction amount of the previous frame is zero, the ideal correction amount of the frame 1 is also zero, and the difference in correction amount between the frames is less than 30 (change amount reduction threshold), the moving image correction amount of the frame 1 is zero. Subsequently, the change amount reduction processing unit 102 reads the frame 2. The moving image correction amount of the previous frame is zero, and the ideal correction amount of the frame 2 is 100. Since the difference in correction amount between the frames is 100, which is more than the change amount reduction threshold of 30, the change amount reduction processing unit 102 calculates the moving image correction amount with which a change amount is reduced. Since the gain coefficient is 1/2, adding 50, which is obtained by multiplying the difference of 100 by 1/2, to zero, which is the moving image correction amount of the previous frame, results in 50. The amount of 50 is the moving image correction amount of the frame 2. Similarly, the difference between the ideal correction amount (100) of the frame 3 and the moving image correction amount (50) of the frame 2 is 50, which is more than the change amount reduction threshold of 30. Thus, adding 25, which is obtained by multiplying the difference of 50 between the frames by 1/2, to 50, which is the moving image correction amount of the frame 2, results in 75. The amount of 75 is the moving image correction amount of the frame 3. The ideal correction amount of the frame 4 is 100, and the difference between the ideal correction amount and the moving image correction amount of the previous frame 3 is 25, which is less than the change amount reduction threshold of 30. Thus, 100, which is the same as the ideal correction amount of the frame 4, is applied to the moving image correction amount of the frame 4. As described above, in a case where the ideal correction amount of each frame has been determined, in the processing of calculating the moving image correction amount, the change amount reduction processing unit 102 can sequentially calculate the moving image correction amount from the head frame and calculate the moving image correction amount to be applied to each frame.

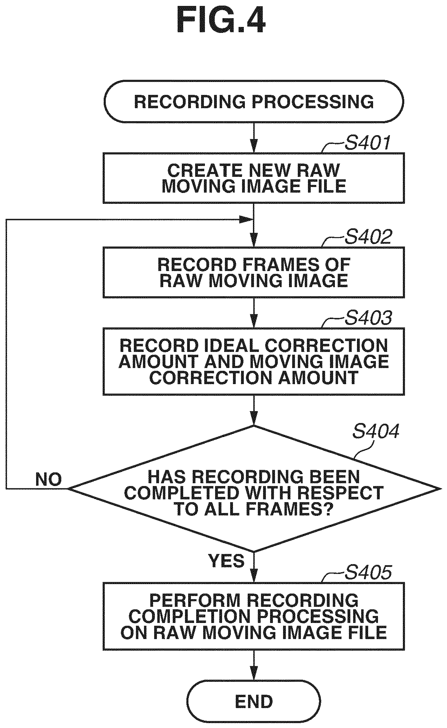

Subsequently, recording processing performed by the recording unit 103 will be described with reference to Fig. 4. Fig. 4 is a flowchart illustrating the recording processing performed by the recording unit 103. The recording processing is performed by the control unit 105 reading a program from the program memory and controlling the recording unit 103 based on the read program. The recording processing is part of the raw moving image capturing processing and starts to be performed in response to the start of the raw moving image capturing processing. In the recording processing, the recording unit 103 performs processing of recording the raw moving image captured in the raw moving image capturing processing as the raw moving image file in the storage medium.

First, in step S401, the recording unit 103 creates a new raw moving image file on the storage medium. Subsequently, the control unit 105 performs processing in steps S402 and S403 with respect to each frame of the raw moving image captured in the raw moving image capturing processing. In step S402, the control unit 105 acquires frames of the raw moving image captured by the image pickup unit 106, and controls the recording unit 103 to record the frames of the raw moving image in the raw moving image file created in step S401. The frames of the raw moving image may have been subjected to compression processing or the like. Next, in step S403, the control unit 105 acquires the ideal correction amount set by the correction amount calculation unit 101 and the moving image correction amount set by the change amount reduction processing unit 102 with respect to each of the frames of the raw moving image recorded in step S402, and controls the recording unit 103 to record the ideal correction amount and the moving image correction amount in the raw moving image file as information regarding image processing parameter of each of the frames of the raw moving image recorded in step S402. In the present exemplary embodiment, the image processing parameter is recorded in a form of being included in metadata in a format of the raw moving image file. However, the image processing parameter (correction amount) may be recorded in a different file from the raw moving image file.

In step S404, the control unit 105 determines whether the processing in steps S402 and S403 has been completed with respect to all the frames of the raw moving image captured in the raw moving image capturing processing. In a case where the processing has been completed with respect to all the frames (YES in step S404), the processing proceeds to step S405. In a case where the processing has not been completed with respect to all the frames (NO in step S404), the processing returns to step S402. The control unit 105 performs the processing in steps S402 and S403 on the next frame, and repeats the processing in steps S402 to S404 until completion of the processing with respect to all the frames.

In a case where the recording processing has been completed with respect to all the frames (YES in step S404), the processing proceeds to step S405. In step S405, the recording unit 103 performs recording completion processing of the raw moving image file created in S401 and in which data of the frames is recorded in steps S402 to S404 and ends the processing of recording the raw moving image.

In this manner, the moving image pickup apparatus 100 according to the present exemplary embodiment adds the image processing parameter to each of the frames of the raw moving image at the time of capturing the raw moving image, and records the image processing parameter as the raw moving image file. Then, the moving image pickup apparatus 100 according to the present exemplary embodiment records, as the image processing parameter, not only the ideal correction amount based on the image capturing condition and the image capturing parameter, but also the moving image correction amount with which a change amount with respect to the ideal correction amount between frames is reduced. In other words, the moving image pickup apparatus 100 records two kinds of parameters in the same image processing. Calculating and recording the image processing parameter in advance at the time of capturing the raw moving image, which requires image processing imposing a heavy load at the time of reproduction, can reduce a load of calculating the image processing parameter at the time of reproduction. Furthermore, the image processing achieving higher image quality based on the ideal correction amount and the image processing in which a moving image can be smoothly reproduced based on the moving image correction amount can be selectively performed without performing recalculation of the image processing parameter at the time of reproduction of the raw moving image.

The description has been given of the exemplary embodiment in which the moving image pickup apparatus 100 individually performs the processing of calculating the ideal correction amount, the processing of calculating the moving image correction amount, and the recording processing. However, the moving image pickup apparatus 100 may collectively perform the processing of calculating the ideal correction amount, the processing of calculating the moving image correction amount, and the recording processing for each frame.

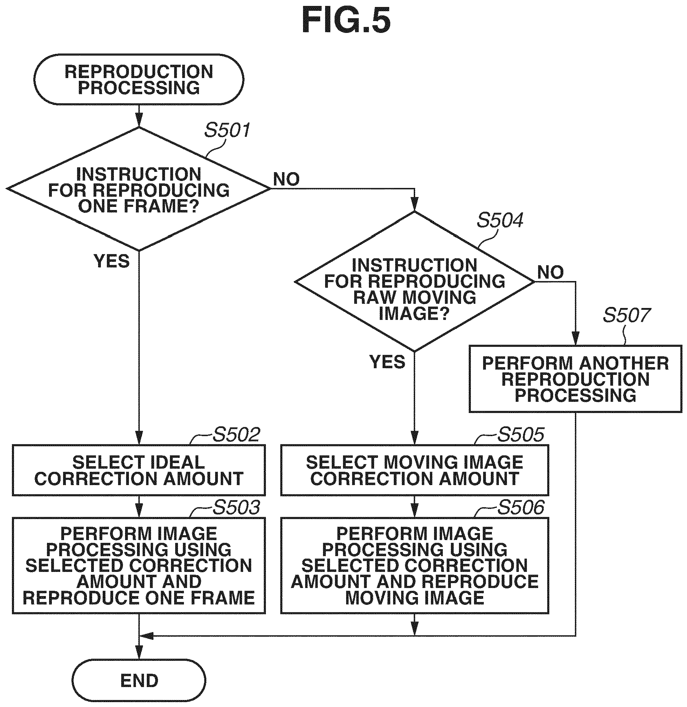

Subsequently, reproduction processing of the raw moving image file performed by the moving image reproduction apparatus 200 will be described with reference to Fig. 5. In the moving image reproduction apparatus 200, the raw moving image file is stored in the storage unit 205, as described above. The reproduction processing is performed in response to acceptance of an instruction for reproducing the raw moving image stored in the storage unit 205 from the user via the operation unit 207. The reproduction processing is implemented by the control unit 204 reading a program from the program memory and performing control of each unit and arithmetic processing based on the read program. First, in step S501, the control unit 204 determines whether a reproduction instruction provided by the user is not an instruction for continuously reproducing the moving image but an instruction for reproducing one frame. In a case where a pause instruction is provided during reproduction of the moving image, an image of one frame is reproduced by the pause instruction. Thus, the control unit 204 determines that the reproduction instruction is the instruction for reproducing one frame, and sets the frame to be reproduced at the time of a pause as a reproduction target frame. In a case where the control unit 204 determines that the reproduction instruction is the instruction for reproducing one frame (YES in step S501), the processing proceeds to step S502. In a case where the control unit 204 determines that the reproduction instruction is not the instruction for reproducing one frame (NO in step S501), the processing proceeds to step S504.

In step S502, the correction amount selection unit 202 selects the ideal correction amount as a correction amount to be used. In a case where the moving image reproduction apparatus 200 reproduces a raw image of one frame instead of continuously reproducing a plurality of frames of the raw moving image (i.e., reproducing the raw moving image), there is no need to reduce the change amount. Thus, the correction amount selection unit 202 selects the ideal correction amount to perform optimum image processing for the one frame that is the reproduction target. Then, in step S503, the image processing unit 206 performs development processing and image processing using the selected ideal correction amount on the frame of the raw moving image selected as the reproduction target, and causes the reproduction output unit 203 to reproduce and output the processed image. In other words, the frame selected as the reproduction target is reproduced and output after being subjected to the image processing using the ideal correction amount, and is displayed on the display apparatus.

In a case where the reproduction instruction is not the instruction for reproducing one frame (NO in step S501), the processing proceeds to step S504. In step S504, the control unit 204 determines whether the reproduction instruction is an instruction for reproducing the raw moving image. In a case where the control unit 204 determines that the reproduction instruction is the instruction for reproducing the moving image (YES in step S504), the processing proceeds to step S505. In a case where the control unit 204 determines that the reproduction instruction is not the instruction for reproducing the moving image (NO in step S504), the processing proceeds to step S507.

In step S505, the correction amount selection unit 202 selects the moving image correction amount as the correction amount to be used. In the case of continuously reproducing the plurality of frames (i.e., reproducing the raw moving image), a large amount of change in correction amount between the frames leads to unnatural display of the moving image. Thus, the correction amount selection unit 202 selects the moving image correction amount with which the amount of change in correction amount between the frames is reduced. In step S506, the image processing unit 206 sequentially performs the development processing and the image processing using the selected moving image correction amount on the frames of the raw moving image that is the reproduction target, and causes the reproduction output unit 203 to reproduce and output the processed moving image. The image processing unit 206 sequentially performs the image processing on each of the frames and causes the reproduction output unit 203 to reproduce and output the processed moving image until a final frame of the moving image is reproduced and output or until the instruction for pausing the reproduction is input by the user, and the image-processed moving image is reproduced and displayed on the display apparatus.

In a case where the reproduction instruction is neither the instruction for reproducing one frame nor the instruction for reproducing the moving image (NO in step S504), the processing proceeds to step S507. In step S507, the control unit 204 performs another reproduction processing in response to a user instruction.

In this manner, in the case of reproducing the raw moving image file, the moving image reproduction apparatus 200 according to the present exemplary embodiment automatically determines whether to use the ideal correction amount or the moving image correction amount based on a type of the reproduction instruction from the user. Thus, even if the user does not perform an operation to select which one to use from among a plurality of image processing parameters, the moving image reproduction apparatus 200 can automatically select a parameter appropriate for a reproduction method, perform the image processing using the parameter appropriate for the reproduction method, and then perform the reproduction.

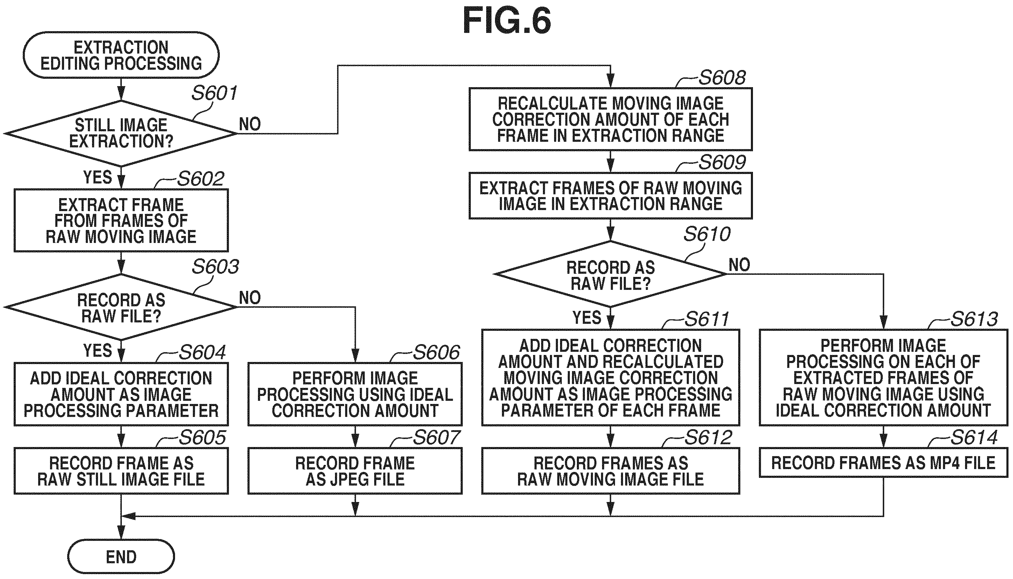

Subsequently, a description will be given of extraction editing processing of the moving image reproduction apparatus 200 with reference to Fig. 6. In the extraction editing processing, a frame is extracted from the moving image in the raw moving image file stored in the storage unit 205, and the frame is recorded as a new file. Fig. 6 is a flowchart illustrating the extraction editing processing performed by the moving image reproduction apparatus 200. The extraction editing processing is performed in response to acceptance of an instruction for extraction editing of the raw moving image stored in the storage unit 205 provided by the user via the operation unit 207. The instruction for extraction editing includes an instruction for a setting regarding whether to extract a still image or moving image, a setting regarding whether to record the frame as a raw file or as a developed image, and a setting regarding a frame or frame range that is an extraction target frame. The extraction editing processing is performed by the control unit 204 reading a program from the program memory and performing control of each unit or arithmetic processing based on the read program.

First, in step S601, the control unit 204 determines whether the instruction for extraction editing is directed to still image extraction or moving image extraction. In a case where the control unit 204 determines that the instruction for extraction editing is directed to the still image extraction (YES in step S601), the processing proceeds to step S602. In a case where the control unit 204 determines that the instruction for extraction editing is directed to the moving image extraction (NO in step S601), the processing proceeds to step S608.

In step S602, in the case of the still image extraction, the control unit 204 extracts a frame set as an extraction target by the user from the frames of the raw moving image in the raw moving image file. Subsequently, in step S603, the control unit 204 determines if a setting is to record the extracted frame as a raw file (raw still image file) or to develop the extracted frame and record the frame as a Joint Photographic Experts Group (JPEG). In a case where the setting is to record the extracted file as the raw file (YES in step S603), the processing proceeds to step S604. In a case where the setting is to develop the extracted frame and record the frame as the JPEG file (NO in step S603), the processing proceeds to step S606.

In step S604, the control unit 204 adds the ideal correction amount, included in the image processing parameter recorded in the raw moving image file as frame information regarding the frame that is the extraction target, to the frame extracted in step S602 as the image processing parameter thereof. In the case where the extracted frame is to be recorded as the raw still image file, the control unit 204 adds the ideal correction amount to the extracted frame as the image processing parameter, but does not add the moving image correction amount thereto. In step S605, the control unit 204 stores the frame to which the ideal correction amount is added as image processing information about the frame in step S604 to the storage unit 205 as the raw still image file. At this time, processing of converting the extracted frame or metadata from a format for the raw moving image file to a format for the raw still image file is also performed.

In step S606, the control unit 204 controls the image processing unit 206 to perform image processing on the frame extracted in step S602 using the ideal correction amount, included in the image processing parameter recorded in the raw moving image file as frame information regarding the frame. The control unit 204 controls the image processing unit 206 to perform not only the image processing using the ideal correction amount, but also the development processing of the frames of the raw moving image. Furthermore, the control unit 204 controls the image processing unit 206 to perform JPEG compression processing. In step S607, the control unit 204 stores the JPEG image subjected to the image processing and the JPEG compression processing in step S606 as a JPEG file in the storage unit 205.

In step S608, in the case of the moving image extraction, the control unit 204 recalculates the moving image correction amount of each of frames of the raw moving image in an extraction range set by the instruction for extraction editing. The control unit 204 performs processing of recalculating the moving image correction amount in step S608 in a similar manner to the processing of calculating the moving image correction amount illustrated in Fig. 3, but not with respect to all the frames of the raw moving image, but with respect to frames of the raw moving image in the extraction range. More specifically, a head frame in the extraction range serves as the initial frame in the processing of recalculating the moving image correction amount. In the head frame in the extraction range, the ideal correction amount set to the head frame is set as the recalculated moving image correction amount. The control unit 204 recalculates the moving image correction amount with respect to the next or subsequent frame so as to reduce a difference in correction amount between frames. Thus, in a case where the ideal correction amount and the moving image correction amount set to the head frame in the extraction range are the same in correction amount, a result of recalculating the moving image correction amount in the extraction range is the same in correction amount as the moving image correction amount set (recorded) in the raw moving image file. Thus, in a case where the ideal correction amount and the moving image correction amount set to the head frame in the extraction range are the same in correction amount, the control unit 204 does not recalculate the moving image correction amount and may use the moving image correction amount recorded in the raw moving image file in steps S611 and S613 instead of the moving image correction amount obtained as the result of the recalculation.

Subsequently, in step S610, the control unit 204 determines whether a setting is to record the extracted frames of the raw moving image as a raw file (raw moving image file) or as a Moving Picture Expert Group-4 (MP4) file after performing the developing processing on extracted frames. In a case where the setting is to record the extracted frames as the raw file (YES in step S610), the processing proceeds to step S611. In a case where the setting is to record the extracted frames as the MP4 file after being subject to the development processing (NO in step S610), the processing proceeds to step S613.

In step S611, the control unit 204 adds, as the image processing parameter, the ideal correction amount recorded in the raw moving image file and the moving image correction amount recalculated in step S608 to each of the frames, which are extracted in step S609, of the raw moving image in the extraction range. In this manner, in a case where frames of the raw moving image is extracted and recorded as the raw moving image file, the ideal correction amount and the moving image correction amount are added. However, the moving image correction amount to be added is not the one recorded in the raw moving image file, but the one obtained by recalculating the moving image correction amount in the extraction range. In step S612, the control unit 204 records the frames of the raw moving image in the extraction range, to which the ideal correction amount and the moving image correction amount are added as the image processing parameters for each frame in step S611, as the raw moving image file to the storage unit 205.

In step S613, the control unit 204 controls the image processing unit 206 to perform image processing on each of the frames, which are extracted in step S609, of the raw moving image in the extraction range using the ideal correction amount included in the image processing parameter recorded in the raw moving image file. The control unit 204 controls the image processing unit 206 to perform not only the image processing using the ideal correction amount, but also the development processing of the frames of the raw moving image, and the compression processing for the moving image (e.g., MPEG data and High Efficiency Video Coding (HEVC) data). Then, in step S614, the control unit 204 stores the moving image subjected to the development processing, the image processing, and the compression processing for the moving images in step S613 as an MP4 file to the storage unit 205.

In this manner, in the extraction editing processing according to the present exemplary embodiment, the control unit 204 selects a correction amount to be recorded together with the image or a correction amount to be used in the image processing from the ideal correction amount and the moving image correction amount (recalculated moving image correction amount) depending on whether the extraction is the still image extraction. Thus, the control unit 204 is configured to select a correction amount appropriate for each of a still image and a moving image. While the control unit 204 automatically selects a correction amount in the present exemplary embodiment, a correction amount selected by the user may be applied in a case where the user selects the correction amount via the operation unit 207.

In this manner, the image processing apparatus according to the present exemplary embodiment is configured to automatically select a correction amount to be used in the image processing or a correction amount to be recorded from the ideal correction amount, the moving image correction amount, and the recalculated moving image correction amount based on a reproduction method and a recording method of the raw moving image. With this configuration, since the image processing apparatus automatically selects a correction amount appropriate for a usage situation of the raw moving image, the user can apply the correction amount appropriate for the usage situation of the raw moving image without selecting the correction amount to be used (recorded).

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments and is defined by the appended claims.

## Claims

1. An image pickup apparatus (100), comprising:
image pickup means (106);
recording means (103) for recording a raw moving image picked up and acquired by the image pickup means, in a storage medium; and
calculation means (101) for calculating an image processing parameter of the raw moving image,
wherein the calculation means (101) is arranged to calculate a first parameter calculated based on an image capturing setting of the raw moving image and a second parameter calculated based on the first parameter as the image processing parameter of the raw moving image,
wherein the first parameter and the second parameter are parameters indicating a correction amount for each frame for the same image processing, the first parameter being an ideal correction amount, and the second parameter being a moving image correction amount calculated such that an amount of change in the second parameter between frames of the raw moving image is decreased with respect to the ideal correction amount, and
wherein the recording means (103) is arranged to record the first parameter and the second parameter together with the raw moving image in the storage medium at a time of picking up of the raw moving image.

2. The image pickup apparatus according to claim 1, wherein the calculation means (101) is arranged to calculate, in a case where a difference between the first parameter of a calculation target frame and the second parameter of a previous frame is more than a predetermined threshold, the second parameter so that the amount of change in the second parameter between the frames of the raw moving image is decreased.

3. The image pickup apparatus according to any one of claims 1 to 2, wherein the calculation means (101) is arranged to calculate the second parameter of a calculation target frame by adding a value, which is obtained by decreasing a difference between the first parameter of the calculation target frame and the second parameter of a previous frame of the calculation target frame to a predetermined ratio, to the second parameter of the previous frame of the calculation target frame.

4. The image pickup apparatus according to any one of claims 1 to 3, wherein the recording means (103) is arranged to record the raw moving image, the first parameter, and the second parameter as one file.

5. The image pickup apparatus according to any one of claims 1 to 3, wherein the recording means (103) is arranged to record the first parameter and the second parameter as a file different from a file in which the raw moving image is recorded.

6. The image pickup apparatus according to any one of claims 1 to 5,
wherein the calculation means (101) is arranged to calculate the first parameter and the second parameter with respect to each frame of the raw moving image, and
wherein the recording means (103) is arranged to record the first parameter and the second parameter of each frame of the raw moving image.

7. The image pickup apparatus according to any one of claims 1 to 6, wherein the image processing parameter is a parameter for marginal illumination correction.

8. The image pickup apparatus according to claim 7, wherein the calculation means (101) is arranged to calculate the first parameter based on a setting of International Standards Organization (ISO) sensitivity at time of capturing the raw moving image and information regarding optical characteristics of the image pickup apparatus (100).

9. A control method of an image pickup apparatus (100), the control method comprising:
picking up and acquiring a raw moving image;
recording the raw moving image picked up and acquired in the picking up and acquiring, in a storage medium; and
calculating an image processing parameter of the raw moving image,
wherein the calculating comprises calculating a first parameter calculated based on an image capturing setting of the raw moving image and a second parameter calculated based on the first parameter as the image processing parameter of the raw moving image,
wherein the first parameter and the second parameter are parameters indicating a correction amount for each frame for the same image processing, the first parameter being an ideal correction amount, and the second parameter being a moving image correction amount calculated such that an amount of change in the second parameter between frames of the raw moving image is decreased with respect to the ideal correction amount, and
wherein the recording comprises recording the first parameter and the second parameter together with the raw moving image in the storage medium at a time of picking up of the raw moving image.

10. A computer program comprising instructions which, when the program is executed by a computer, causes the computer to perform the control method of an image pickup apparatus (100) according to claim 9.

11. A computer-readable storage medium storing a computer program according to claim 10.

## Patentansprüche

1. Bildaufnahmevorrichtung (100), umfassend:
eine Bildaufnahmeeinrichtung (106);
eine Aufzeichnungseinrichtung (103) zum Aufzeichnen eines von der Bildaufnahmeeinrichtung aufgenommenen und erfassten Rohbewegtbilds in einem Speichermedium; und
eine Berechnungseinrichtung (101) zum Berechnen eines Bildverarbeitungsparameters des Rohbewegtbilds,
wobei die Berechnungseinrichtung (101) eingerichtet ist, als den Bildverarbeitungsparameter des Rohbewegtbilds einen basierend auf einer Bildaufnahmeeinstellung des Rohbewegtbilds berechneten ersten Parameter und einen basierend auf dem ersten Parameter berechneten zweiten Parameter zu berechnen,
wobei der erste Parameter und der zweite Parameter Parameter sind, die einen Korrekturbetrag für ein jeweiliges Einzelbild für die gleiche Bildverarbeitung angeben, wobei der erste Parameter ein idealer Korrekturbetrag ist und der zweite Parameter ein Bewegtbildkorrekturbetrag ist, der so berechnet wird, dass ein Änderungsbetrag des zweiten Parameters zwischen Einzelbildern des Rohbewegtbilds in Bezug auf den idealen Korrekturbetrag verringert wird, und
wobei die Aufzeichnungseinrichtung (103) eingerichtet ist, zu einem Zeitpunkt des Aufnehmens des Rohbewegtbilds den ersten Parameter und den zweiten Parameter zusammen mit dem Rohbewegtbild im Speichermedium aufzuzeichnen.

2. Bildaufnahmevorrichtung nach Anspruch 1, wobei die Berechnungseinrichtung (101) eingerichtet ist, falls eine Differenz zwischen dem ersten Parameter eines Berechnungsziel-Einzelbilds und dem zweiten Parameter eines vorherigen Einzelbilds größer als ein vorbestimmter Schwellenwert ist, den zweiten Parameter so zu berechnen, dass der Änderungsbetrag des zweiten Parameters zwischen den Einzelbildern des Rohbewegtbilds verringert wird.

3. Bildaufnahmevorrichtung nach einem der Ansprüche 1 bis 2, wobei die Berechnungseinrichtung (101) eingerichtet ist, den zweiten Parameter eines Berechnungsziel-Einzelbilds durch Addieren eines Werts, der durch Verringern einer Differenz zwischen dem ersten Parameter des Berechnungsziel-Einzelbilds und dem zweiten Parameter eines vorherigen Einzelbilds des Berechnungsziel-Einzelbilds auf ein vorbestimmtes Verhältnis erhalten wird, zu dem zweiten Parameter des vorherigen Einzelbilds des Berechnungsziel-Einzelbilds zu berechnen.

4. Bildaufnahmevorrichtung nach einem der Ansprüche 1 bis 3, wobei die Aufzeichnungseinrichtung (103) eingerichtet ist, das Rohbewegtbild, den ersten Parameter und den zweiten Parameter als eine Datei aufzuzeichnen.

5. Bildaufnahmevorrichtung nach einem der Ansprüche 1 bis 3, wobei die Aufzeichnungseinrichtung (103) eingerichtet ist, den ersten Parameter und den zweiten Parameter als eine Datei aufzuzeichnen, die von einer Datei, in der das Rohbewegtbild aufgezeichnet ist, verschieden ist.

6. Bildaufnahmevorrichtung nach einem der Ansprüche 1 bis 5,
wobei die Berechnungseinrichtung (101) eingerichtet ist, den ersten Parameter und den zweiten Parameter in Bezug auf ein jeweiliges Einzelbild des Rohbewegtbilds zu berechnen, und
wobei die Aufzeichnungseinrichtung (103) eingerichtet ist, den ersten Parameter und den zweiten Parameter eines jeweiligen Einzelbilds des Rohbewegtbilds aufzuzeichnen.

7. Bildaufnahmevorrichtung nach einem der Ansprüche 1 bis 6, wobei der Bildverarbeitungsparameter ein Parameter für eine Randbeleuchtungskorrektur ist.

8. Bildaufnahmevorrichtung nach Anspruch 7, wobei die Berechnungseinrichtung (101) eingerichtet ist, den ersten Parameter basierend auf einer Einstellung einer International Standards Organization (ISO)-Empfindlichkeit zum Zeitpunkt des Aufnehmens des Rohbewegtbilds und Informationen bezüglich optischer Eigenschaften der Bildaufnahmevorrichtung (100) zu berechnen.

9. Steuerverfahren einer Bildaufnahmevorrichtung (100), wobei das Steuerverfahren umfasst:
Aufnehmen und Erfassen eines Rohbewegtbilds;
Aufzeichnen des beim Aufnehmen und Erfassen aufgenommenen und erfassten Rohbewegtbilds in einem Speichermedium; und
Berechnen eines Bildverarbeitungsparameters des Rohbewegtbilds,
wobei das Berechnen Berechnen eines basierend auf einer Bildaufnahmeeinstellung des Rohbewegtbilds berechneten ersten Parameters und eines basierend auf dem ersten Parameter berechneten zweiten Parameters als den Bildverarbeitungsparameter des Rohbewegtbilds umfasst,
wobei der erste Parameter und der zweite Parameter Parameter sind, die einen Korrekturbetrag für ein jeweiliges Einzelbild für die gleiche Bildverarbeitung angeben, wobei der erste Parameter ein idealer Korrekturbetrag ist und der zweite Parameter ein Bewegtbildkorrekturbetrag ist, der so berechnet wird, dass ein Änderungsbetrag des zweiten Parameters zwischen Einzelbildern des Rohbewegtbilds in Bezug auf den idealen Korrekturbetrag verringert wird, und
wobei das Aufzeichnen umfasst: Aufzeichnen des ersten Parameters und des zweiten Parameters zusammen mit dem Rohbewegtbild in dem Speichermedium zu einem Zeitpunkt des Aufnehmens des Rohbewegtbilds.

10. Computerprogramm, umfassend Anweisungen, die, wenn das Programm von einem Computer ausgeführt wird, den Computer veranlassen, das Steuerverfahren einer Bildaufnahmevorrichtung (100) nach Anspruch 9 auszuführen.

11. Computerlesbares Speichermedium, das ein Computerprogramm nach Anspruch 10 speichert.

## Revendications

1. Appareil de capture d'image (100), comprenant :
des moyens de capture d'image (106) ;
des moyens d'enregistrement (103) pour enregistrer une image animée brute capturée et acquise par les moyens de capture d'image, dans un support de stockage ; et
des moyens de calcul (101) pour calculer un paramètre de traitement d'image de l'image animée brute,
dans lequel les moyens de calcul (101) sont agencés pour calculer un premier paramètre calculé sur la base d'un réglage de capture d'image de l'image animée brute et un second paramètre calculé sur la base du premier paramètre en tant que paramètre de traitement d'image de l'image animée brute,
dans lequel le premier paramètre et le second paramètre sont des paramètres indiquant une quantité de correction pour chaque trame pour le même traitement d'image, le premier paramètre étant une quantité de correction idéale, et le second paramètre étant une quantité de correction d'image animée calculée de telle sorte qu'une quantité de changement du second paramètre entre des trames de l'image animée brute est diminuée par rapport à la quantité de correction idéale, et
dans lequel les moyens d'enregistrement (103) sont agencés pour enregistrer le premier paramètre et le second paramètre conjointement avec l'image animée brute dans le support de stockage à un moment de la capture de l'image animée brute.

2. Appareil de capture d'image selon la revendication 1, dans lequel les moyens de calcul (101) sont agencés pour calculer, dans un cas où une différence entre le premier paramètre d'une trame cible de calcul et le second paramètre d'une trame précédente est supérieure à un seuil prédéterminé, le second paramètre de telle sorte que la quantité de changement du second paramètre entre les trames de l'image animée brute est diminuée.

3. Appareil de capture d'image selon l'une quelconque des revendications 1 à 2, dans lequel les moyens de calcul (101) sont agencés pour calculer le second paramètre d'une trame cible de calcul en ajoutant une valeur, qui est obtenue en diminuant une différence entre le premier paramètre de la trame cible de calcul et le second paramètre d'une trame précédente de la trame cible de calcul jusqu'à un rapport prédéterminé, au second paramètre de la trame précédente de la trame cible de calcul.

4. Appareil de capture d'image selon l'une quelconque des revendications 1 à 3, dans lequel les moyens d'enregistrement (103) sont agencés pour enregistrer l'image animée brute, le premier paramètre, et le second paramètre sous la forme d'un seul fichier.

5. Appareil de capture d'image selon l'une quelconque des revendications 1 à 3, dans lequel les moyens d'enregistrement (103) sont agencés pour enregistrer le premier paramètre et le second paramètre sous la forme d'un fichier différent d'un fichier dans lequel l'image animée brute est enregistrée.

6. Appareil de capture d'image selon l'une quelconque des revendications 1 à 5,
dans lequel les moyens de calcul (101) sont agencés pour calculer le premier paramètre et le second paramètre par rapport à chaque trame de l'image animée brute, et
dans lequel les moyens d'enregistrement (103) sont agencés pour enregistrer le premier paramètre et le second paramètre de chaque trame de l'image animée brute.

7. Appareil de capture d'image selon l'une quelconque des revendications 1 à 6, dans lequel le paramètre de traitement d'image est un paramètre de correction d'éclairage marginal.

8. Appareil de capture d'image selon la revendication 7, dans lequel les moyens de calcul (101) sont agencés pour calculer le premier paramètre sur la base d'un réglage de sensibilité selon l'Organisation internationale de normalisation (ISO) au moment de la capture de l'image animée brute et d'informations concernant des caractéristiques optiques de l'appareil de capture d'image (100).

9. Procédé de commande d'un appareil de capture d'image (100), le procédé de commande comprenant :
la capture et l'acquisition d'une image animée brute ;
l'enregistrement de l'image animée brute capturée et acquise lors de la capture et de l'acquisition, dans un support de stockage ; et
le calcul d'un paramètre de traitement d'image de l'image animée brute,
dans lequel le calcul comprend le calcul d'un premier paramètre calculé sur la base d'un réglage de capture d'image de l'image animée brute et d'un second paramètre calculé sur la base du premier paramètre en tant que paramètre de traitement d'image de l'image animée brute,
dans lequel le premier paramètre et le second paramètre sont des paramètres indiquant une quantité de correction pour chaque trame pour le même traitement d'image, le premier paramètre étant une quantité de correction idéale, et le second paramètre étant une quantité de correction d'image animée calculée de telle sorte qu'une quantité de changement du second paramètre entre des trames de l'image animée brute est diminuée par rapport à la quantité de correction idéale, et
dans lequel l'enregistrement comprend l'enregistrement du premier paramètre et du second paramètre conjointement avec l'image animée brute dans le support de stockage à un moment de la capture de l'image animée brute.

10. Programme informatique comprenant des instructions qui, lorsque le programme est exécuté par un ordinateur, amènent l'ordinateur à effectuer le procédé de commande d'un appareil de capture d'image (100) selon la revendication 9.

11. Support de stockage lisible par ordinateur stockant un programme informatique selon la revendication 10.
